# EUROPEAN PATENT APPLICATION

(11) **EP 2 594 347 A1**
(43) Date of publication of application: **22.05.2013**
(21) Application number: 10854741.5
(22) Date of filing: 02.09.2010
(51) Int. Cl.: B21D 47/00, B62D 25/10, G10K 11/172

(54) **PLATE HAVING UNEVEN PART, AND VEHICLE PANEL AND LAMINATED STRUCTURE USING SAME**

(30) Priority: 12.07.2010 JP 2010157577
(71) Applicant: Sumitomo Light Metal Industries, Ltd., Minato-ku Tokyo 105-8601 (JP)
(72) Inventor: TAKAHASHI Masaya, Tokyo 105-8601 (JP)
(74) Representative: Kramer - Barske - Schmidtchen
(86) International application number: PCT/JP2010/065037
(87) International publication number: WO 2012/008059

(57) **Abstract**

A sheet material 1 that has a concave-convex part 20 is provided. Using a first reference plane K1, a second reference plane K2, and an intermediate reference plane K3 as a reference, boxes, which are partitioned by a lattice that longitudinally and laterally divides a unit area 23 disposed in the intermediate reference plane K3 into n equal parts, are categorized into first boxes 231 and second boxes 232. The areas in which the first boxes 231 are linked serve as first reference areas 213, and the areas in which the second boxes 232 are linked serve as second reference areas 223. First areas 21, which protrude from the first reference areas 213 toward the first reference plane K1, and second areas 22, which protrude from the second reference areas 213 toward the second reference plane K2, are provided. Each of the first areas comprises a first top surface 211 and first side surfaces 212. Each of the second areas comprises a second top surface 221 and second side surfaces 221.

## Description

### TECHNICAL FIELD

The present invention relates to a sheet material whose stiffness is increased by the formation of a concave-convex part, and to a vehicle panel and a laminated structure that are configured using the same.

### BACKGROUND ART

With the aim of reducing the weight of, for example, an automobile, the potential replacement of the material of components comprising steel sheets and the like with a lightweight material such as an aluminum alloy sheet is being studied. In such a case, assuming that the weight is reduced, it is necessary that the required stiffness be ensured.
To date, studies conducted to increase stiffness without increasing the thickness of the sheet material have provided the sheet material with a concave-convex pattern, and the stiffness has been increased by virtue of the shape.
For example, one of the components of an automobile is formed of a sheet material called a heat insulator. As a material therefor, Patent Document 1 proposes the formation of numerous protruding parts by embossing in order to ensure sufficient stiffness without increasing sheet thickness. Furthermore, in addition to a heat insulator, sheet materials have also been proposed (refer to Patent Documents 2-6) that increase stiffness in various applications by forming a concave-convex part via embossing and the like.

### PRIOR ART LITERATURE

### Patent Documents

Patent Document 1: Japanese Unexamined Patent Application Publication No. 2000-136720
Patent Document 2: Japanese Unexamined Patent Application Publication No. 2000-257441
Patent Document 3: Japanese Unexamined PatentApplication Publication No. H9-254955
Patent Document 4: Japanese Unexamined Patent Application Publication No. 2000-288643
Patent Document 5: Japanese Unexamined Patent Application Publication No. 2002-307117
Patent Document 6: Japanese Unexamined Patent Application Publication No. 2002-321018

### SUMMARY

### PROBLEMS SOLVED BY THE INVENTION

A sheet material wherein numerous concave-convex parts are formed as in Patent Document 1 actually increases stiffness more than would be the case were the concave-convex parts absent. Nevertheless, it is obvious that the optimal shape of the concave-convex part for increasing stiffness without increasing sheet thickness has yet to be elucidated. Furthermore, there is always a demand for further increasing the stiffness increase factor.
In addition, there is a demand for reducing the weight-by even just a little bit-of parts consisting of sheet materials not only in automobiles but also in various machines and apparatuses and the like. In addition to the need to reduce weight, there is the expectation of the effect of reducing the cost of materials. In addition, in the case of a sheet material (i.e., a material having a sheet shape), there is a demand for increasing stiffness regardless of the material property.

In addition, there is demand for a high degree of stiffness over and above that of the conventional art even for, for example, laminated structures that use a sheet material having a concave-convex part that features a high stiffness increase effect, vehicle panels that use a sheet material having a concave-convex part that features a high stiffness increase effect, and the like.

The present invention was conceived considering such problems, and an object of the present invention is to provide a sheet material that increases stiffness by providing a concave-convex part, wherein the sheet material has a concave-convex part pattern with a stiffness increase effect higher than that of the conventional art, and to provide a vehicle panel and a laminated structure using the same.

### MEANS FOR SOLVING THE PROBLEMS

A first aspect of the invention is a sheet material whose stiffness is increased by the formation of a concave-convex part, wherein
three reference planes-namely, a first reference plane, an intermediate reference plane, and a second reference plane, which are three virtual planes that are successively disposed spaced apart and parallel to one another-are used as a reference;
it is assumed that unit areas, which are virtual squares, are spread out in the intermediate reference plane;
virtual boxes, which are partitioned by a lattice that longitudinally and laterally divides the interior of each of the unit areas into n equal parts, wherein n is an integer greater than or equal to 4, are categorized into two types, namely, first boxes and second boxes; each column and each row of the boxes are arranged such that they definitely contain both the first boxes and the second boxes and such that two or more of the same type of box are disposed adjacently either longitudinally or laterally, and such that the total number of the first boxes and the total number of the second boxes inside each unit area are both an integer that is within the range of n²/2 ±0.5; the areas in which the first boxes are linked serve as first reference areas; the areas in which the second boxes are linked serve as second reference areas;
the concave-convex part is provided with first areas, which protrude from the first reference areas defined in the intermediate reference plane toward the first reference plane, and second areas, which protrude from the second reference areas defined in the intermediate reference plane toward the second reference plane;
each of the first areas comprises a first top surface, which is a projection of the first reference area into the first reference plane at either unity or reduction magnification, and first side surfaces, which connect the contour of the first top surface with the contour of its first reference area;
and each of the second areas comprises a second top surface, which is a projection of the second reference area into the second reference plane at either unity or reduction magnification, and second side surfaces, which connect the contour of the second top surface with the contour of its second reference area.

A second aspect of the invention is a laminated structure wherein a plurality of sheet materials are laminated, wherein at least one of the sheet materials is a sheet material that has the concave-convex part according to the first aspect of the invention.

A third aspect of the invention is a vehicle panel that has an outer panel and an inner panel, which is joined to a rear surface of the outer panel, wherein one or both of the outer panel and the inner panel comprises a sheet material that has a concave-convex part according to any one of claim 1 through claim 13.

### EFFECTS OF THE INVENTION

The sheet material that has the concave-convex part of the first aspect of the invention has the specially shaped concave-convex part. The concave-convex part is provided with: the first areas, which protrude from the first reference areas defined in the intermediate reference plane toward the first reference plane; and the second areas, which protrude from the second reference areas defined in the intermediate reference plane toward the second reference plane. Furthermore, each of the first areas comprises the first top surface and the first side surfaces, which connect the contour of the first top surface with the contour of its first reference area; in addition, each of the second areas comprises the second top surface and the second side surfaces, which connect the contour of the second top surface with the contour of its second reference area.
Furthermore, the first top surface and the second top surface can be configured either by the surface formed by the first reference plane and the second reference plane, respectively, or, without being limited to the first reference plane and the second reference plane, by regions that protrude from the first reference plane and the second reference plane in directions that are in the reverse direction of the intermediate reference plane. Examples of the shape of the protruding region include a dome, a ridge line, and a cone, but the shape of the protruding region is not limited thereto.

Because it has such a structure, the sheet material of the present invention has superior bending stiffness and surface stiffness as well as superior energy absorption characteristics.
The following considers reasons why the stiffness is increased. Namely, the first areas and the second areas comprise the first top surfaces and the second top surfaces, which are disposed at positions spaced apart in the thickness directions of the sheet material, and the first side surfaces and the second side surfaces, which intersect in the thickness directions of the sheet material; furthermore, a large amount of material can be disposed at a position spaced apart from the neutral plane. Consequently, the large amount of material can be used effectively as a strength member, and thereby the stiffness increase effect can be increased greatly.

In addition, the surface area of the first reference area and the surface area of the second reference area are the same. Consequently, the surface areas of the first area and the second area that protrude to the front and rear of the sheet material are the same. Accordingly, the stiffness can be increased more effectively.
In addition, attendant with the increase in the stiffness, it is also possible to obtain the effect of improving damping characteristics; in addition, the irregular shape makes it possible to obtain the effect of suppressing sound reverberations.

Thus, according to the present invention, it is possible to obtain a sheet material that has the pattern of the concave-convex part wherein the effect of increased stiffness is higher than that in the conventional art and the energy absorption characteristics are superior.

In the second aspect of the invention, the sheet material that has the concave-convex part having superior stiffness as mentioned above is used as part of the laminated structure, and thereby it is possible to easily obtain a laminated structure whose stiffness is extremely high and whose energy absorption characteristics are superior. In addition, it is possible to obtain the effect of improving the damping characteristics attendant with the increase in stiffness, and to obtain the effect of improving the sound absorbing characteristics by virtue of containing an air layer.

In the third aspect of the invention, the sheet material that has the concave-convex part having high stiffness as mentioned above is used, in the outer panel or the inner panel, or both, and thereby it is possible to easily obtain a vehicle panel whose stiffness is extremely high and whose energy absorption characteristics are superior. In addition, it is possible to obtain the effect of improving the damping characteristics attendant with the increase in stiffness, and to obtain the effect of improving the sound absorbing characteristics by virtue of containing an air layer.

### BRIEF DESCRIPTION OF THE DRAWINGS

FIG. 1 shows a first embodiment, wherein (a) is a partial plan view of a concave-convex part, and (b) is a partial enlarged view of a cross sectional view taken along the A-A line in (a).
FIG. 2 is a partial oblique view of the concave-convex part according to the first embodiment.
FIG. 3 is an explanatory diagram that shows the arrangement of first areas and second areas inside a unit area according to the first embodiment.
FIG. 4 is an explanatory diagram that shows an intermediate reference plane of a sheet material that has a concave-convex part wherein the unit areas are continuously disposed with the same attitude according to the first embodiment.
FIG. 5(a) is an explanatory diagram that shows an FEM analysis, in the 0° direction, of a cantilevered beam according to the first embodiment, and FIG. 5(b) is an explanatory diagram that shows an FEM analysis, in the 45° direction, of the cantilevered beam according to the first embodiment.
FIG. 6 is an explanatory diagram that shows, according to the first embodiment, an FEM analysis of a disk.
FIG. 7 is an explanatory diagram that shows, according to the first embodiment, the results of an FEM analysis of a cantilevered beam for the case wherein an angle formed by one side of a test piece and one side of a unit area has been changed.
FIG. 8 is an explanatory diagram that shows, according to a second embodiment, the intermediate reference plane of the sheet material that comprises the concave-convex part according to the first embodiment, wherein shapes that are line symmetric with respect to the sides of the unit areas of the first embodiment are continuously arranged.
FIG. 9 is an explanatory diagram that shows, according to the second embodiment, an intermediate reference plane of the sheet material that comprises the concave-convex part, wherein shapes that correspond to the unit areas of the first embodiment rotated by 90° at a time are continuously arranged.
FIG. 10 is an explanatory diagram that shows, according to the second embodiment, the intermediate reference plane of the sheet material that comprises the concave-convex part, wherein the shapes that are line symmetric with respect to the sides of the unit areas of the first embodiment and the shapes that correspond to the unit areas of the first embodiment rotated by 90° at a time are randomly arranged.
FIG. 11 is a partial oblique view of the concave-convex part, according to the second embodiment, that includes the intermediate reference plane shown in FIG. 9.
FIG. 12 is an explanatory diagram that shows, according to the second embodiment, an FEM analysis of a cantilevered beam in the 0° direction.
FIG. 13 is an explanatory diagram that shows, according to the second embodiment, an FEM analysis of a cantilevered beam in the 45° direction.
FIG. 14 is an explanatory diagram that shows, according to the second embodiment, the results of an FEM analysis of a cantilevered beam for the case wherein the angle formed by one side of the test piece and one side of the unit area has been changed.
FIG. 15 is an explanatory diagram that shows a three point bending test method according to the second embodiment.
FIG. 16 is a load versus displacement line graph of a three point bending test according to the second embodiment.
FIG. 17 is an explanatory diagram that shows, according to a third embodiment, an arrangement of first reference areas and second reference areas inside the unit area.
FIG. 18 is a partial plan view of the concave-convex part according to a fourth embodiment.
FIG. 19 is an explanatory diagram that shows, according to the fourth embodiment, an FEM analysis of a cantilevered beam.
FIG. 20 is an explanatory diagram that shows, according to the fourth embodiment, an arrangement of the first areas and the second areas inside the unit area.
FIG. 21 is an explanatory diagram that shows, according to the fourth embodiment, the intermediate reference plane of the sheet material that comprises the concave-convex part, wherein shapes that are line symmetric to the sides of the unit areas are continuously arranged.
FIG. 22 is an explanatory diagram that shows, according to the fourth embodiment, the results of an FEM analysis of a cantilevered beam for the case wherein the angle formed by one side of the test piece and one side of the unit area has been changed.
FIG. 23 is a load versus displacement line graph of a three point bending test according to the fourth embodiment.
FIG. 24 is an explanatory diagram that shows, according to a fifth embodiment, an arrangement of the first areas and the second areas inside the unit area.
FIG. 25 is an explanatory diagram that shows, according to the fifth embodiment, the intermediate reference plane of the sheet material that comprises the concave-convex part, wherein the unit areas are continuously arranged with the same attitude.
FIG. 26 is an explanatory diagram that shows, according to a sixth embodiment, the intermediate reference plane of the sheet material that comprises the concave-convex part, wherein the unit areas and a unit area of a size different therefrom are combined.
FIG. 27 is a partial plan view of the concave-convex part according to a seventh embodiment.
FIG. 28 is an explanatory diagram that shows, according to an eighth embodiment, a cylindrical sheet material that comprises the concave-convex part.
FIG. 29 is an explanatory development view of a laminated structure according to a ninth embodiment.
FIG. 30 is an explanatory development view of a vehicle panel according to a tenth embodiment.

### DETAILED DESCRIPTION OF EMBODIMENTS

In the present invention, none of the expressions of shape, such as "square," are limited to the narrow concepts of geometry but rather includes shapes that can be generally recognized as those shapes; for example, shapes that would naturally be allowed include: shapes wherein the sides are somewhat curved; so-called fillets wherein a round and the like needed for a molded shape is created in a corner part, a surface, and the like; and shapes provided with a so-called curvature.
In addition, in the present invention, the expression "parallel plane" is not limited to the narrow concept of geometry but rather extends to those planes that can generally be recognized as being parallel, for example, two planes wherein the distance between an arbitrary point in one plane and a point at which a normal line to that arbitrary point intersects the other plane is substantially the same at every portion.

In a sheet material that has the concave-convex part, the number n into which the unit area is equally divided is preferably in the range of 4 ≤ n ≤ 10.
Satisfying the condition 4 ≤ n ≤ 10 makes it possible to obtain a superior shape for the concave-convex part with little stiffness anisotropy. If n < 4, then the concave-convex part shape will become simple, anisotropy will arise in the stiffness, and it may not be possible to obtain the desired stiffness. If n > 10, then the shape of the concave-convex part will be reduced, and it may not be possible to obtain the desired stiffness. In addition, if the shape of the concave-convex part becomes complex, then there is a risk that it will become difficult to form.

In addition, in the sheet material that has the concave-convex part, the first reference areas and the second reference areas can be configured by linking the first boxes and the second boxes, respectively, and then deforming some of the corner parts of both into arcuate shapes such that the surface areas of both do not change.
Here, the abovementioned corner parts indicate the corner parts that form convex angles in contour lines of the first reference areas and corner parts that form convex angles in contour lines of the second reference areas. In this case, the concave-convex corner parts of the sheet material that has the concave-convex part can be smoothed, which makes the sheet material easier to form, expands its range of application, and improves its designability.

In addition, in a sheet material that has the concave-convex part, the first reference areas and the second reference areas can be configured by linking the first boxes and the second boxes, respectively, and then by inclining some of the boundary lines of both such that the surface areas of both do not change.
In this case, too, the formability of the sheet material that has the concave-convex part can be improved, the range of application can be expanded, or the designability can be improved.

In addition, in a sheet material that has the concave-convex part, the unit areas are preferably all of the same size.
In this case, it is possible to obtain a sheet material that has a superior concave-convex part with little stiffness anisotropy.

In addition, in a sheet material that has the concave-convex part, the unit areas are preferably of a plurality of sizes.
In this case, concave-convex part shapes of various sizes can be adopted in accordance with the application, and designability can be improved.

In addition, in a sheet material that has the concave-convex part, an inclination angle θ₁ (°) of the first side surface with respect to the intermediate reference plane and an inclination angle θ₂ (°) of the second side surface with respect to the intermediate reference plane are preferably within the range of 10°-90°.
If the inclination angle θ₁ (°) of the first side surface and the inclination angle θ₂ (°) of the second side surface with respect to the intermediate reference plane are in the range of 10°-90°, then a concave-convex part shape that has a superior stiffness increase factor can be obtained while ensuring formability.

If the inclination angle θ₁ (°) of the first side surface and the inclination angle θ₂ (°) of the second side surface are less than 10°, then it becomes difficult to increase the height with which the first areas and the second areas protrude, which decreases the stiffness increase factor. In addition, if the inclination angle θ₁ (°) of the first side surface and the inclination angle θ₂ (°) of the second side surface exceed 90°, then forming the concave-convex part is problematic, and such an area is not needed.
Furthermore, in a case wherein a metal sheet is press formed, because of problems with formability, the upper limit value of the inclination angle θ₁ (°) of the first side surface and the upper limit value of the inclination angle θ₂ (°) of the second side surface are more preferably less than 70°. Accordingly, the range is more preferably 10° to 70°.
In addition, the first side surface and the second side surface comprise a plurality of surfaces, but it is not necessary for all of those surfaces to have the same inclination angle; for example, the inclination angle may vary with the region. However, every surface is preferably within the abovementioned preferable inclination angle range.

In addition, in a sheet material that has the concave-convex part, at least part of the first top surface and at least part of the second top surface are preferably provided with sub concave-convex parts, whose shapes protrude vertically in the thickness directions using the first reference plane and the second reference plane, as neutral planes.
The sub concave-convex part can be adapted to, for example, a reduced size of the shape that corresponds to the concave-convex part of the present invention discussed above. In addition, other concave-convex shapes may also be adopted.
In this case, the stiffness of the sheet material that has the concave-convex part can be further increased.

In addition, in a sheet material that has the concave-convex part, at least part of the first reference plane, at least part of the intermediate reference plane, and at least part of the second reference plane, these planes being successively arranged, are preferably parallel curved surfaces.
In this case, the sheet material that has the superior concave-convex part whose stiffness is high can be deformed into various shapes, and the range of application can be expanded.

In addition, in a sheet material that has the concave-convex part, in the sheet material, the concave-convex part is formed preferably by press forming a metal sheet.
The concave-convex part can be easily formed by press forming a metal sheet, such as by embossing, or by plastic working a metal sheet, such as by rolling. Consequently, the superior concave-convex part shape can be adapted to a metal sheet comparatively easily. Various materials that can be plastically worked, such as aluminum alloy, steel, and copper alloy, can be used as the material of the metal sheet.

Furthermore, in addition to plastic working such as rolling, it is also possible to use casting, cutting, and the like as the forming method.
In addition, as long as it has the concave-convex part, the sheet material is also effective with materials other than metal; for example, the sheet material can also be a resin sheet and the like. In the case of a resin material and the like, the concave-convex part can be formed by, for example, injection molding or hot pressing. Compared with metal material, resin material tends not to be constrained in its forming shape and has a greater number of degrees of freedom in its design.

In addition, in a sheet material that has the concave-convex part, a sheet thickness t (mm) of the metal sheet prior to forming is preferably 0.05-6.0 mm.
When the sheet thickness of the metal sheet is less than 0.05 mm or exceeds 6.0 mm, there is little need to increase its stiffness in application.

In addition, in a sheet material that has the concave-convex part, a ratio L/t of a length L (mm) of one side of the unit area to the sheet thickness t (mm) is preferably 10-2000.
If the ratio L/t is less than 10, then there is a risk that forming will become difficult; moreover, if the ratio L/t exceeds 2,000, then there is a risk that problems will arise, such as it being no longer possible to sufficiently form the concave-convex part shape, and that stiffness will decrease.

In addition, in a sheet material that has the concave-convex part, a ratio H1/t of a projection height H1 (mm) of the first area to the sheet thickness t (mm), and the maximum inclination angle θ₁ (°) formed between the first side surface and the intermediate reference plane preferably have the relationship 1 ≤ (H1/t) ≤ -3θ₁ + 272; and a ratio H2/t of a projection height H2 (mm) of the second area to the sheet thickness t (mm), and the maximum inclination angle θ₂ (°) formed between the second side surface and the intermediate reference plane preferably have the relationship 1 ≤ (H2/t) ≤ -3θ₂ + 272.

If the ratio H1/t is less than 1, then there is a risk that a problem will arise wherein the stiffness increase effect produced by the formation of the first areas will not be sufficient. Moreover, if the ratio H1/t exceeds -3θ₁ + 272, then there is a risk that a problem will arise wherein forming will become difficult. Likewise, if the ratio H2/t is less than 1, then there is a risk that a problem will arise wherein the stiffness increase effect produced by the formation of the first areas will not be sufficient. Moreover, if the ratio H2/t exceeds -3θ₂ + 272, then there is a risk that a problem will arise wherein forming will become difficult.

In addition, in the laminated structure according to the second aspect of the invention, it is possible to configure a laminated body with a three-layer structure wherein the sheet material that has the concave-convex part is used as one core material, and one flat faceplate is provided and disposed on each side thereof. In addition, it is also possible to configure a structure that repeats such a substrate structure, namely, a multilayer structure wherein a plurality of the sheet materials, each sheet material having the concave-convex part, is stacked, with a flat faceplate inserted after every sheet material.
In addition, it is also possible to adopt a structure wherein the plurality of sheet materials having the concave-convex parts are directly stacked and used as the core material, and the flat faceplates are joined to a surface on one side thereof or to surfaces on both sides thereof.
In addition, it is also possible to configure a laminated structure in the state wherein only the plurality of the sheet materials having the concave-convex parts are directly stacked.
The number of the sheet materials stacked can be modified in accordance with the application and the required characteristics.

In addition, the vehicle panel of the third aspect of the invention is not limited to the hood of an automobile and can also be adapted to: a panel, such as a door, a roof, a floor, and a trunk lid; a reinforcing member; and an energy absorbing member, such as a bumper, a crush box, a door beam, and the like. In addition, a steel sheet, an aluminum alloy sheet, or the like can also be used as the outer panel and the inner panel.
If the outer panel comprises an aluminum alloy sheet, then, for example, a 6000 series alloy is ideal because it is relatively low cost. In addition, if the inner panel comprises an aluminum alloy sheet, then, for example, a 5000 series alloy sheet is ideal because it has relatively good formability.

### EMBODIMENTS

### (First Embodiment)

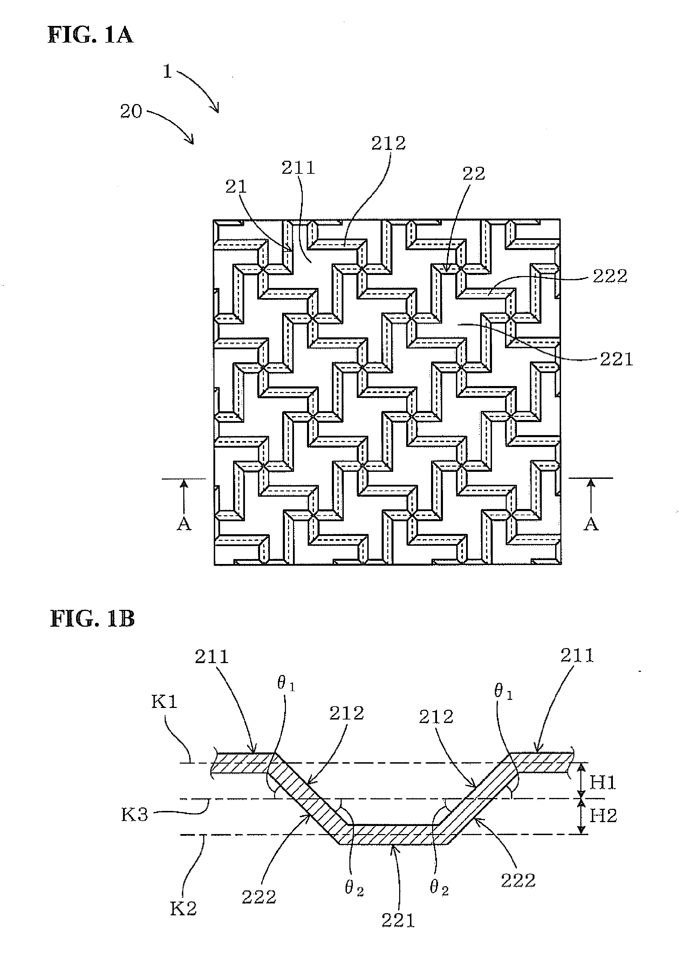

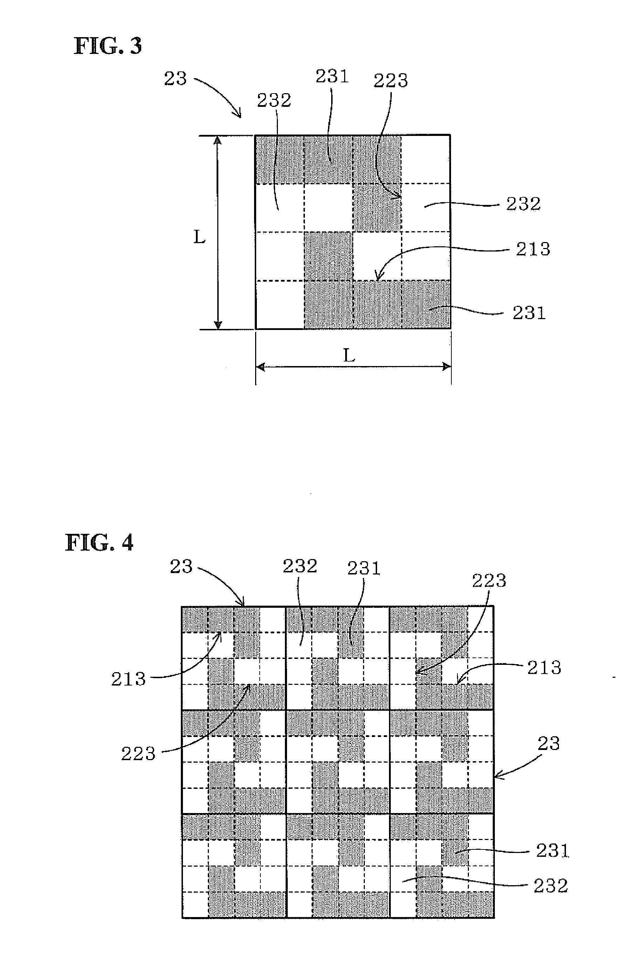

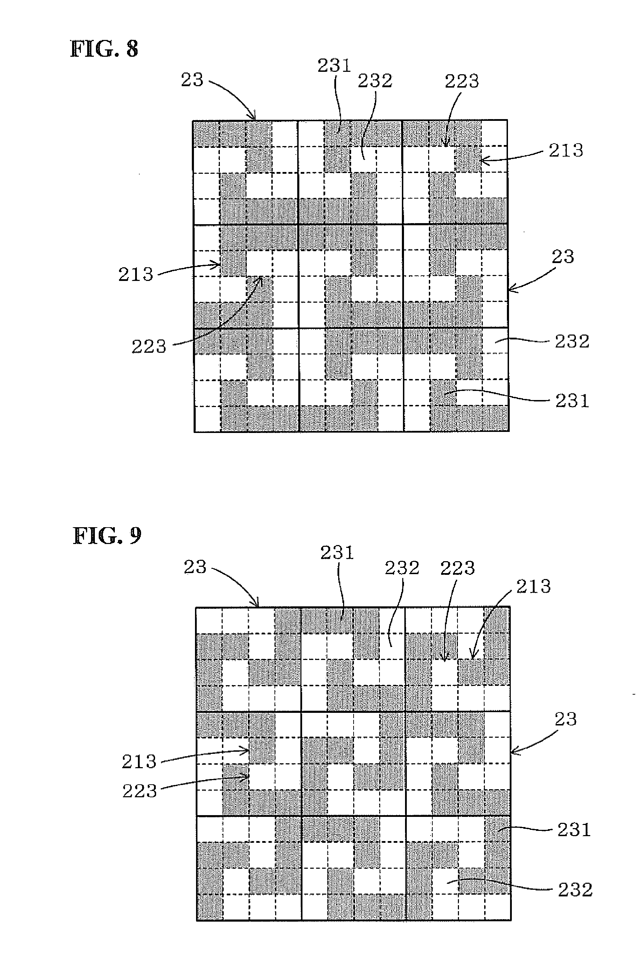

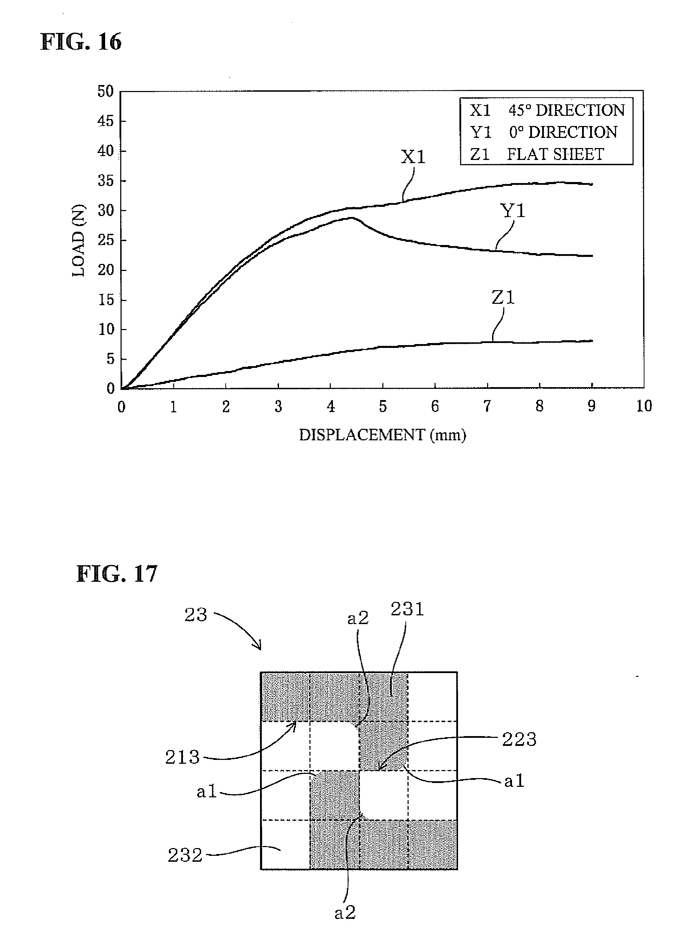

A sheet material 1 that has a concave-convex part 20 according to a first embodiment will now be explained, referencing FIG. 1 through FIG. 4.

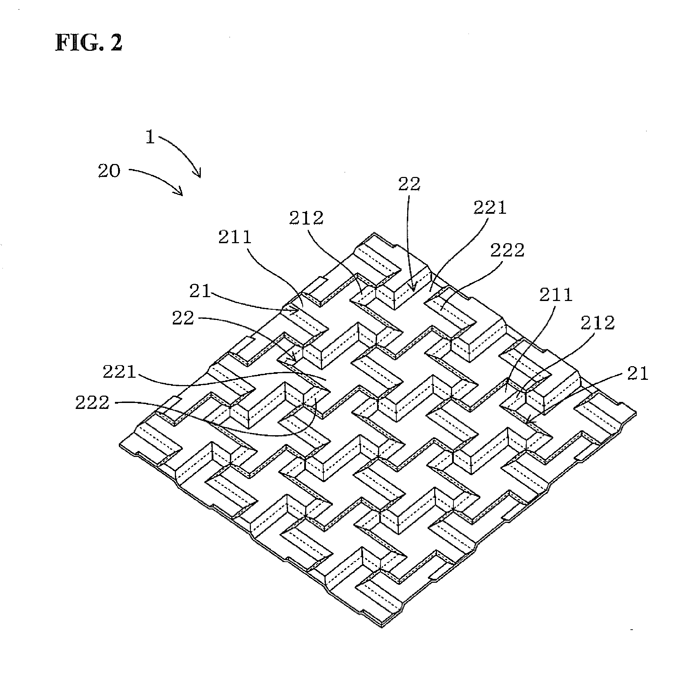

FIG. 1 is a partial plan view of the concave-convex part 20. Portions that are contours of first areas 21 and second areas 22 in an intermediate reference plane in the same figure and are not visible as outlines are indicated by broken lines (the same applies likewise to FIG. 2, FIG. 5, FIG. 11 through FIG. 13, FIG. 18, FIG. 19, FIG. 27, and FIG. 29, which are discussed below).
In addition, in FIG. 3, the shape of the concave-convex part 20 belonging to the sheet material 1 is represented by an arrangement of first reference areas 213 and second reference areas 223 in a unit area 23 that is disposed in an intermediate reference plane K3 (the same applies likewise to FIG. 17, FIG. 20, and FIG. 24, which are discussed below).
In addition, in FIG. 4, the shape of the concave-convex part 20 belonging to the sheet material 1 is represented by an arrangement of the unit areas 23 in the intermediate reference plane K3 (the same applies likewise to FIG. 8 through FIG. 10, FIG. 21, FIG. 25, and FIG. 26, which are discussed below).

The sheet material 1 that has the concave-convex part 20 of the present embodiment is a sheet material whose stiffness has been increased by the formation of the concave-convex part 20, as shown in FIG. 1 through FIG. 2.
The concave-convex part 20 is configured as follows.
Using as a reference three reference planes-namely, a first reference plane K1, the intermediate reference plane K3, and a second reference plane K2, which are three virtual planes that are successively disposed spaced apart and parallel to one another-let us assume that the unit area 23, which is a virtual square, is spread out in the intermediate reference plane K3.

As shown in FIG. 3, virtual boxes, which are partitioned by a lattice that longitudinally and laterally divides the interior of each of the unit areas 23 into four equal parts, are categorized into two types: first boxes 231 and second boxes 232. Each column and each row of the boxes are arranged such that they definitely contain both the first boxes 231 and the second boxes 232 and such that two or more of the same type of box are disposed adjacently either longitudinally or laterally. At this time, the total number of the first boxes 231 and the total number of the second boxes 232 inside the unit area 23 are both eight. Furthermore, the areas in which the first boxes 231 are linked serve as the first reference areas 213, and the areas in which the second boxes 232 are linked serve as the second reference areas 223.

As shown in FIG. 1 and FIG. 2, the concave-convex part 20 comprises: the first areas 21, which protrude from the first reference areas 213 defined in the intermediate reference plane K3 toward the first reference plane K1; and the second areas 22, which protrude from the second reference areas 223 defined in the intermediate reference plane K3 toward the second reference plane K2. Each of the first areas 21 comprises: a first top surface 211, which is a projection of the first reference area 213 into the first reference plane K1 at either unity or reduced magnification; and first side surfaces 212, which connect the contour of the first top surface 211 with the contour of its first reference area 213. In addition, each of the second areas 22 comprises: a second top surface 221, which is a projection of the second reference area 223 into the second reference plane K2 at either unity or reduction magnification; and second side surfaces 222, which connect the contour of the second top surface 221 with the contour of its second reference area 223.

As shown in FIG. 1 (b), the three reference planes, namely, the first reference plane K1, the intermediate reference plane K3, and the second reference plane K2, in the present embodiment are parallel planes. In addition, the first top surface 211 is configured such that the center of the sheet thickness thereof overlaps the first reference plane K1, and the second top surface 221 is configured such that the center of the sheet thickness thereof overlaps the second reference plane K2. Furthermore, the distance between the first reference plane K1 and the intermediate reference plane K3 is designated as the projection height H1 (mm), and the distance between the second reference plane K2 and the intermediate reference plane K3 is designated as the projection height H2 (mm).
In addition, in the present embodiment, the first areas 21 and the second areas 22 are of the same shape and dimensions, and only their projection directions differ. The projection height H1 (mm) of the first area 21 and the projection height H2 (mm) of the second area 22 are each 1.0 mm.

In addition, in the present embodiment, the sheet material 1 that has the concave-convex part 20 is a flat sheet that is made of a 1000 series aluminum and whose sheet thickness t = 0.3 mm.
The concave-convex part 20 is press formed using a pair of molds. Furthermore, it is also possible to use, as the forming method, some other plastic working method such as roll forming that forms by using a pair of forming rolls, the surfaces of which are profiled with the desired concave-convex shape.

In addition, as shown in FIG. 1(b), the inclination angle θ₁ (°) of the first side surface 212 with respect to the intermediate reference plane K3 and the inclination angle θ₂ (°) of the second side surface 222 with respect to the intermediate reference plane K3 are both 45°; furthermore, the first side surface 212 and the second side surface 222 are each formed as one continuous flat surface without any bent parts.

In addition, in the present embodiment, as shown in FIG. 3 and FIG. 4, the length L of each side of each of the virtual unit areas 23 that form the intermediate reference plane K3 is 24 mm, all the unit areas 23 are of equal size, and all are disposed continuously with the same attitude longitudinally and laterally.
In addition, the ratio L/t of the length L (mm) of each side of the unit area 23 and the sheet thickness t (mm) of the aluminum sheet is 80, and is within a range of 10-2000.

In addition, the ratio H1/t of the projection height H1 (mm) of the first area 21 to the sheet thickness t (mm) is 3.33. In addition, the inclination angle θ₁ formed by the first side surface 212 and the intermediate reference plane K3 is 45°, and -3θ₁ + 272 = 137. Accordingly, the relationship 1 ≤ H1/t ≤ 137 is satisfied. Likewise, the ratio H2/t of the projection height H2 (mm) of the second area 22 to the sheet thickness t (mm) is 3.33. In addition, the inclination angle θ₂ formed by the second side surface 222 and the intermediate reference plane K3 is 45°, and -3θ₂ + 272 = 137. Accordingly, the relationship 1 ≤ H2/t ≤ 137 is satisfied.

The sheet material 1 that has the concave-convex part 20 of the present embodiment has a specially shaped concave-convex part as described above. Namely, the concave-convex part 20 is provided with: the first areas 21, which protrude from the first reference areas 213 defined in the intermediate reference plane K3 toward the first reference plane K1; and the second areas 22, which protrude from the second reference areas 223 defined in the intermediate reference plane K3 toward the second reference plane K2. Furthermore, each of the first areas 21 comprises the first top surface 211 and the first side surfaces 212, which connect the contour of the first top surface 211 with the contour of its first reference area 213; in addition, each of the second areas 22 comprises the second top surface 221 and the second side surfaces 222, which connect the contour of the second top surface 221 with the contour of its second reference area 223.

The first areas 21 and the second areas 22 comprise the first top surfaces 211 and the second top surfaces 221, which are disposed at positions spaced apart in the thickness directions of the sheet material 1, and the first side surfaces 212 and the second side surfaces 222, which intersect in the thickness directions of the sheet material 1; furthermore, a large amount of material can be disposed at a position spaced apart from the neutral plane. Consequently, the large amount of material can be used effectively as a strength member, and thereby the stiffness increase effect and the energy absorption characteristics can be increased greatly.

In addition, the surface area of the first reference area 213 and the surface area of the second reference area 223 are the same. Consequently, the surface areas of the first area 21 and the second area 22 that protrude to the front and rear of the sheet material 1 are the same. Accordingly, the stiffness can be increased more effectively.
In addition, attendant with the increase in the stiffness, it is also possible to obtain the effect of improving damping characteristics; in addition, the irregular shape makes it possible to obtain the effect of suppressing sound reverberations.

To quantitatively determine the stiffness increase effect of the sheet material 1 of the first embodiment, a bending stiffness evaluation of a cantilevered beam and a surface stiffness evaluation of a disk were performed using FEM analysis.

### (FEM Analysis)

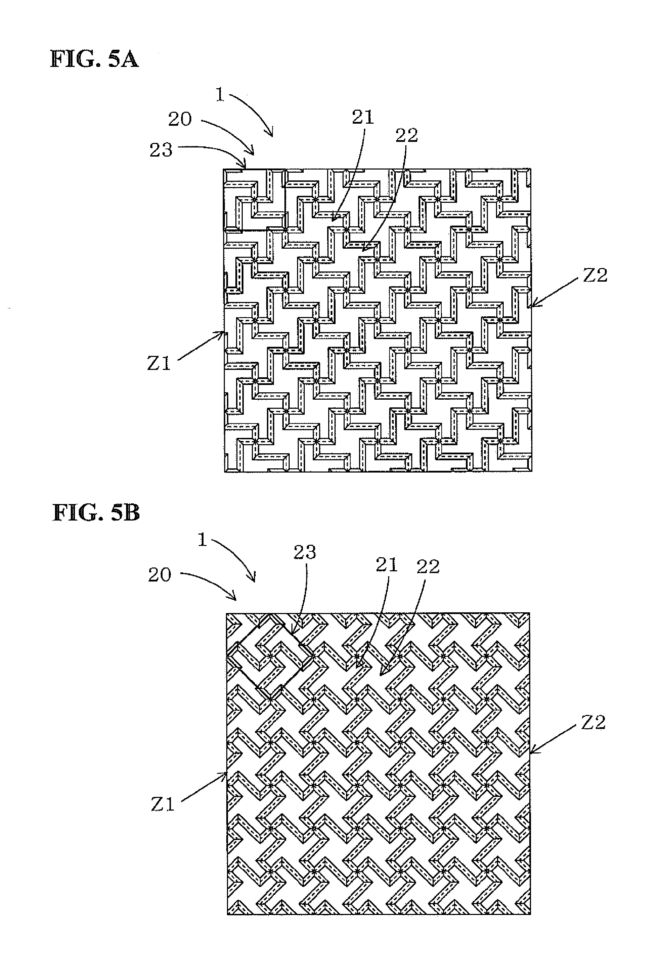

As shown in FIG. 5, in the bending stiffness evaluation of the cantilevered beam using FEM analysis, two analyses were performed: one in the direction wherein one end Z1 is a fixed end and an other end Z2 is a free end (i.e., the 0° direction); and another in a direction that is inclined by 45° (i.e., the 45° direction). Hereinbelow, the same applies to the other embodiments.

### <Bending Stiffness Evaluation of a Cantilevered Beam>

In the FEM analysis of the cantilevered beam, as shown in FIGS. 5(a), (b), the one end Z1 of the test piece is fixed, the other end Z2 of the test piece is a free end, and the amount of deflection was calculated when a load of 1 N was applied to a center part of the free end.
The test piece has a rectangular shape measuring 120 mm × 120 mm, and the concave-convex part 20 described in the present embodiment is formed over the entire surface. In addition, based on the percentage of increase in the surface area, the sheet thickness t after the formation of the sheet is 0.265 mm.
The evaluation was performed by comparing the amount of deflection obtained by conducting the same FEM analysis on the flat sheet shaped original sheet whereon the concave-convex part 20 is not formed.

### <0° Direction>

As shown in FIG. 5 (a), the side of the test piece is provided in a direction parallel to one side of the unit area 23 (FIG. 3).

The sheet material 1 that has the concave-convex part 20 of the first embodiment was compared with the flat sheet shaped original sheet, and it was found that the bending stiffness increased by 9.9 times.

### <45° Direction>

As shown in FIG. 5(b), the side of the test piece is provided in a direction that forms a 45° angle with respect to one side of the unit area 23 (FIG. 3).
The sheet material 1 that has the concave-convex part 20 of the first embodiment was compared with the flat sheet shaped original sheet, and it was found that the bending stiffness increased by 7.0 times.

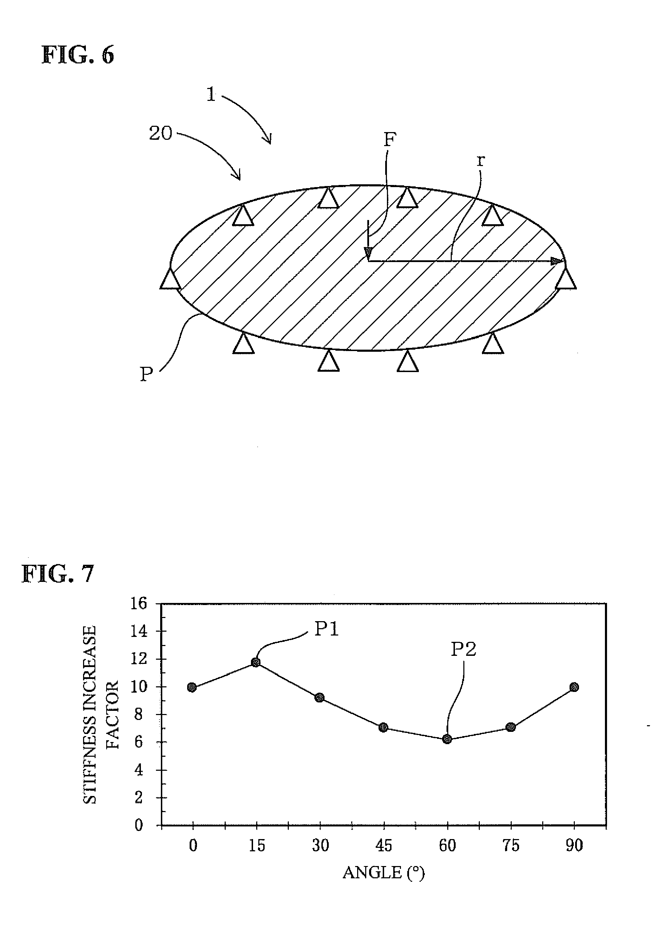

In addition, using the same method of FEM analysis of the cantilevered beam, a bending stiffness evaluation was performed for the cases wherein the angle between one side of the test piece and one side of the unit area 23 was changed to directions corresponding to 0°, 15°, 30°, 45°, 60°, 75°, and 90°. The results of the FEM analyses are shown in the graph (FIG. 7) wherein the abscissa represents the angle and the ordinate represents the bending stiffness increase factor. As a result, it can be clearly seen that the stiffness increase factor (P2) in the 60° direction is 6.20, which is the minimum value, and the stiffness increase factor (P1) in the 15° direction is 11.72 times, which is the maximum value.

### <Surface Stiffness Evaluation of a Disk>

As shown in FIG. 6, in an FEM analysis of a disk, only movement in the thickness directions of the sheet was constrained over the entire perimeter of an outer circumferential end part P of the test piece, and the amount of deflection was calculated when a load F of 1 N was applied to the center part of the disk.
The test piece has a discoidal shape with a radius r = 60 mm, and the concave-convex part 20 described in the present embodiment was formed over the entire surface.
The stiffness evaluation was performed by comparing the amount of deflection obtained by conducting the same FEM analysis on the flat sheet shaped original sheet whereon the concave-convex part 20 is not formed.
As a result of the FEM analysis of the disk, it was found that the surface stiffness of the sheet material 1 that has the concave-convex part 20 of the first embodiment increased by 7.37 times over that of the flat sheet shaped original sheet.

### (Second Embodiment)

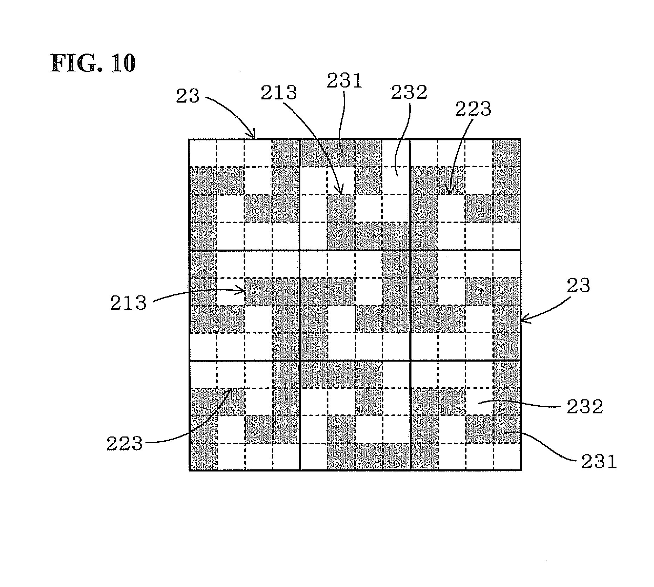

The examples shown in FIG. 8 through FIG. 10 are modified examples of the sheet material 1 that has the concave-convex part 20 of the first embodiment, wherein the concave-convex part 20, which protrudes from the first reference areas 213 and the second reference areas 223 shown in FIG. 8 through FIG. 10 to the first reference plane K1 and the second reference plane K2, is formed. Other aspects of the configuration are the same as those in the first embodiment.
The sheet material 1 in the intermediate reference plane K3 as shown in FIG. 8 is an example wherein the unit areas 23 of the first embodiment are disposed continuously such that they have line symmetry with respect to their sides.
The sheet material 1 in the intermediate reference plane K3 shown in FIG. 9 is an example wherein the unit areas 23 of the first embodiment are disposed continuously, rotated 90° at a time.
The sheet material 1 in the intermediate reference plane K3 shown in FIG. 10 is an example wherein the unit areas 23 of the first embodiment are disposed randomly in such a manner as to have line symmetry with respect to the sides of the unit areas 23 and/or to be rotated 90° at a time.
Each of the above-modified examples, too, obtains the same functions and effects as those of the first embodiment.

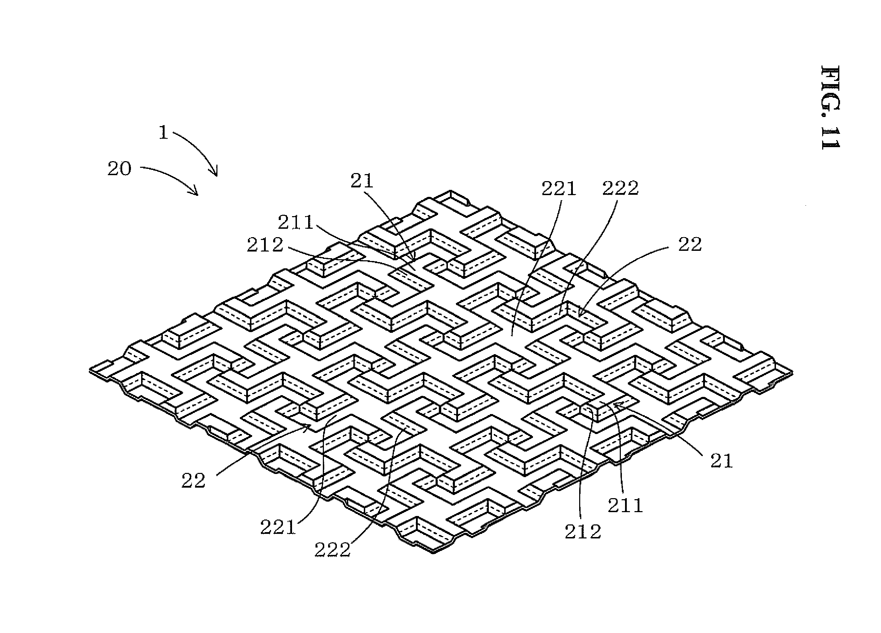

In addition, as shown in FIG. 11, an FEM analysis and a three point bending test were performed in order to quantitatively determine the stiffness increase effect and the energy absorption characteristics in the sheet material 1 provided with the concave-convex part 20 in the intermediate reference plane K3 shown in FIG. 9, which is discussed above.

### (FEM Analysis)

In the present embodiment, too, an FEM analysis was conducted as in the first embodiment.

### <Bending Stiffness Evaluation of a Cantilevered Beam>

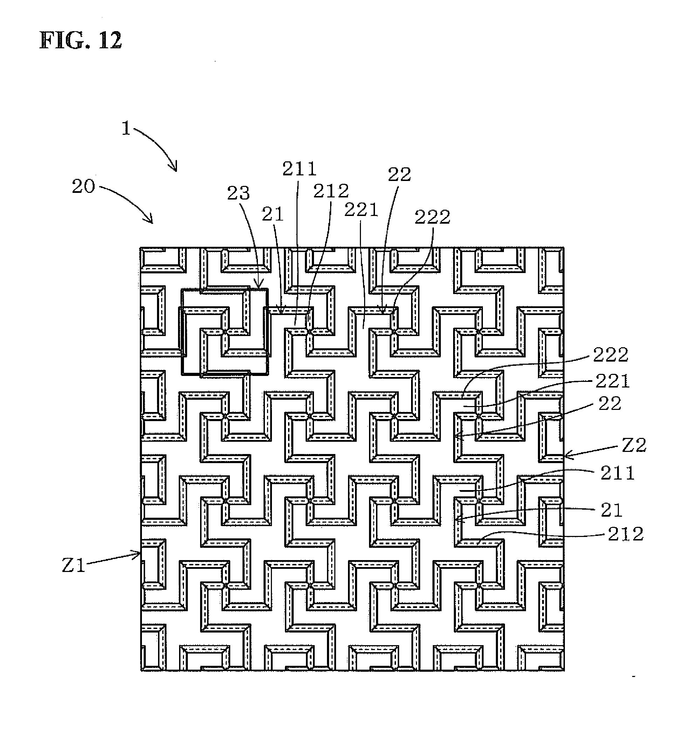

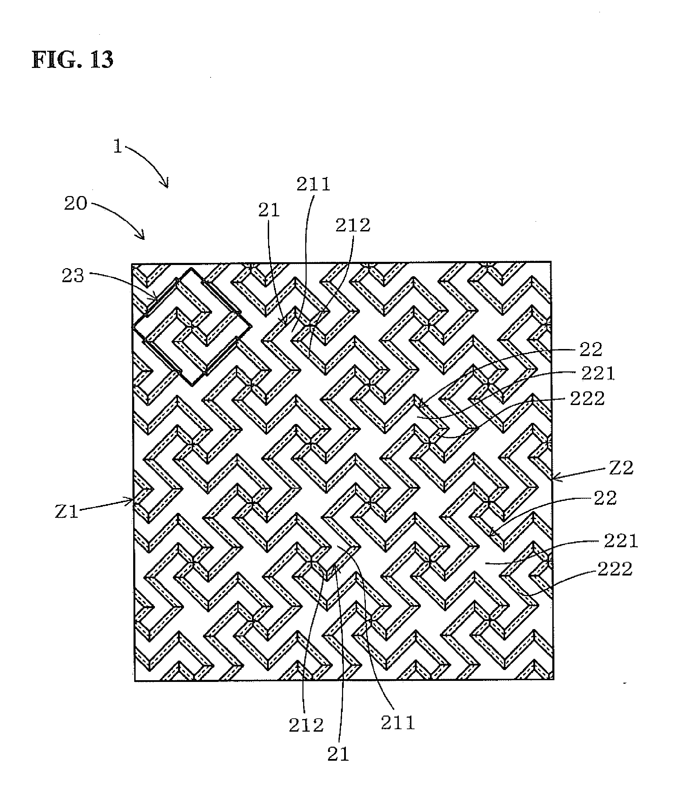

In an FEM analysis of a cantilevered beam, as shown in FIG. 12 and FIG. 13, the one end Z1 of the test piece is a fixed end, the other end Z2 is a free end, and the amount of deflection was calculated when a load of 1 N was applied to the center part of the free end.
The test piece has a rectangular shape measuring 120 mm × 120 mm, and the concave-convex part 20 described in the present embodiment is formed over the entire surface. In addition, based on the percentage increase in the surface area, the sheet thickness t after the formation of the sheet is 0.264 mm.
The evaluation was performed by comparing the amount of deflection obtained by conducting the same FEM analysis on the flat sheet shaped original sheet whereon the concave-convex part 20 is not formed.

### <0° Direction>

As shown in FIG. 12, a side of the test piece is provided in directions parallel to the one side of the unit area 23.
It was found that the bending stiffness of the sheet material 1 that has the concave-convex part 20 of the second embodiment increased by 7.56 times over that of the flat sheet shaped original sheet.

### <45° direction>

As shown in FIG. 13, a side of the test piece is provided in directions that form a 45° angle with respect to the one side of the unit area 23.
It was found that the bending stiffness of the sheet material 1 that has the concave-convex part 20 of the second embodiment increased by 8.46 times over that of the flat sheet shaped original sheet.

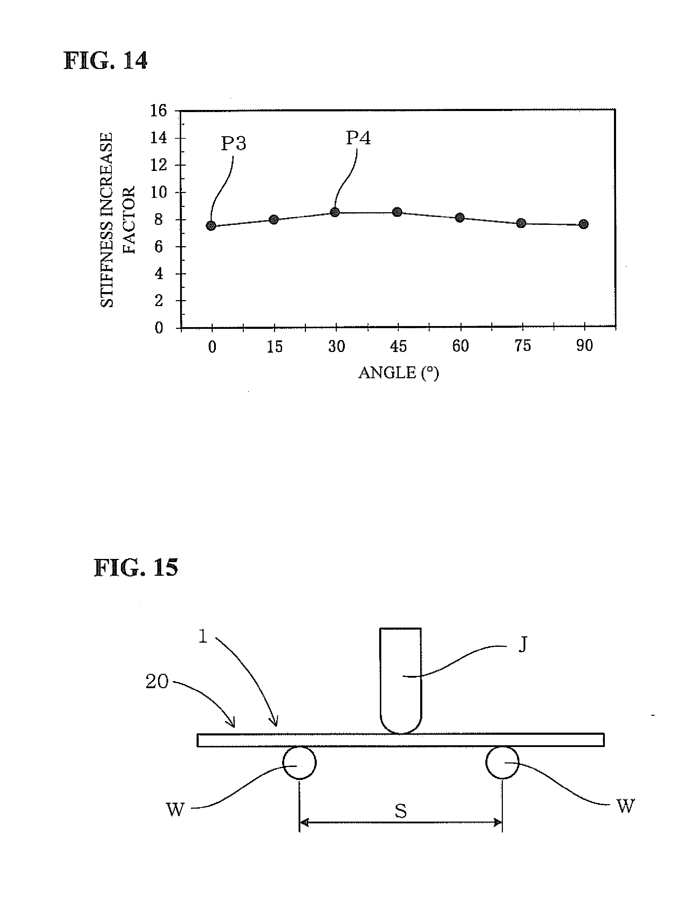

In addition, using the same FEM analysis method of a cantilevered beam, a bending stiffness evaluation was performed for the cases wherein the angle between one side of the test piece and one side of the unit area 23 was changed to directions corresponding to 0°, 15°, 30°, 45°, 60°, 75°, and 90°. The results of the FEM analysis are shown in the graph (FIG. 14), wherein the abscissa represents the angle and the ordinate represents the bending stiffness increase factor. As a result, it can be clearly seen that the stiffness increase factor (P3) in the 0° direction is 7.56 times, which is the minimum value, and the stiffness increase factor (P4) in the 30° direction is 8.49 times, which is the maximum value. In addition, it can be clearly seen that the shape of the concave-convex part 20 shown in the present embodiment has an extremely small amount of bending stiffness anisotropy.

### <Surface Stiffness Evaluation of a Disk>

In the FEM analysis of a disk, as shown in FIG. 6, only movement in the thickness directions of the sheet over the entire perimeter of the outer circumferential end part P of the test piece was constrained, and the amount of deflection was calculated when a load of 1 N was applied to the center part of the disk.
The test piece has a discoidal shape with a radius of 60 mm, and the concave-convex part 20 shown in the present embodiment is formed over the entire surface.
The stiffness evaluation was performed by comparing the amount of deflection obtained by conducting the same FEM analysis on the flat sheet shaped original sheet whereon the concave-convex part 20 is not formed.
As a result of the FEM analysis of the disk, it was found that the stiffness of the sheet material 1 that has the concave-convex part 20 of the second embodiment increased by 10.3 times over that of the flat sheet shaped original sheet.

### (Three Point Bending Test)

In the three point bending test, as shown in FIG. 15, the test piece was disposed on two fulcrums W, which comprise two cylindrical support members laid on their sides and disposed parallel to one another with a fulcrum-to-fulcrum distance S = 80 mm, a load was applied by a flat sheet shaped pressing jig J, whose tip cross section forms a semicircular shape, and the amount of displacement was measured at the center position of the test piece surface. The evaluation was conducted by performing the same three point bending test on the flat sheet shaped original sheet whereon the concave-convex part 20 is not formed, and then comparing line graphs of load versus displacement.
The test piece is an A3004-O material with a shape prior to forming that measures 100 mm × 100 mm and a sheet thickness t = 0.3 mm, and the concave-convex part 20 described in the present embodiment is formed over the entire surface. In addition, the forming directions thereof are the same as in the FEM analyses of the cantilevered beam in the 0° direction and the 45° direction.

FIG. 16 shows a load versus displacement line graph, wherein the ordinate represents the load obtained from the result of the three point bending test and the abscissa represents the displacement. In the same figure, the measurement results of the sheet material 1 provided with the concave-convex part 20 in the 45° direction are indicated by a solid line X1, the measurement results of the sheet material 1 provided with the concave-convex part 20 in the 0° direction are indicated by a solid line Y1, and the measurement results of the flat sheet shaped original sheet are indicated by a solid line Z1.

As shown in FIG. 16, the rising slope angle of the solid line X1 is 6.7 times that of the solid line Z1. Accordingly, it can be clearly seen that the bending stiffness of the sheet material 1 provided with the concave-convex part 20 in the 45° direction increased by 6.7 times over that of the flat sheet shaped original sheet. In addition, the rising slope angle of the solid line Y1 is 6.4 times that of the solid line Z1. Accordingly, it can be clearly seen that the bending stiffness of the sheet material 1 provided with the concave-convex part 20 in the 0° direction increased by 6.4 times over that of the flat sheet shaped original sheet.

In addition, the average load value up to a displacement of 9 mm is 25.94 N for the sheet material 1 provided with the concave-convex part 20 in the 45° direction and is 5.36 N for the flat sheet shaped original sheet. Accordingly, it can be clearly seen that the amount of energy absorbed by the sheet material 1 is approximately 4.84 times that of the flat sheet shaped original sheet. In addition, it can be clearly seen that the amount of energy absorbed by the sheet material 1 provided with the concave-convex part 20 in the 0° direction is 20.78 N, which is an increase of approximately 3.87 times over that of the flat sheet shaped original sheet.

Furthermore, the following considers the reason why a difference appears between the results of the bending stiffness evaluation of the cantilevered beam using FEM analysis discussed above and the results of the three point bending test. Namely, FEM analysis is an approximate calculation, and the results of that calculation include error. In addition, in the FEM model, even though the sheet thickness is set taking the reduction in the sheet thickness into consideration, the sheet thickness distribution is uniform. In contrast, in the test piece used in the three point bending, a distribution arises in the sheet thickness attendant with the deformation during forming. In addition, in the actual test piece, a fillet with a radius of 2.0 mm is formed in a corner part in the neutral plane of the sheet material owing to the circumstances of the forming process, but a fillet is not formed in the FEM model. Furthermore, it is also conceivable that there is a difference between the fulcrum-to-fulcrum distance in the three point bending test and the fulcrum-to-fulcrum distance in the FEM analysis of the bending of a cantilevered beam.

### (Third Embodiment)

As shown in FIG. 17, the present embodiment is an example wherein the first reference areas 213 and the second reference areas 223 disposed inside the unit area 23 of the first embodiment are configured by linking the first boxes 231 and the second boxes 232, respectively, and subsequently deforming some of the corner parts of both the first reference areas 213 and the second reference areas 223 into an arcuate shape such that the surface areas of both do not change. Specifically, as shown in the same figure, convex angle parts al at two locations that form the contour lines of the first reference areas 213 and convex angle parts a2 at two locations that form the second reference areas 223 are deformed into arcuate shapes having the same radius of curvature.

In the present embodiment, the concave-convex part 20, which protrudes from the first reference areas 213 and the second reference areas 223 shown in FIG. 17 to the first reference plane K1 and the second reference plane K2, is formed. In addition, as in the first embodiment and the modified examples of the first embodiment described in the second embodiment, the shape of the concave-convex part 20 can be modified by changing the arrangement of the unit areas 23 of the present embodiment.
Other aspects of the configuration are the same as those in the first embodiment.
In the present embodiment, the concave-convex corner parts of the sheet material 1 that has the concave-convex part 20 can be smoothed, which makes the sheet material 1 easier to form, expands its range of application, and improves its designability.
Otherwise, the same functions and effects as in the first embodiment are obtained.

### (Fourth Embodiment)

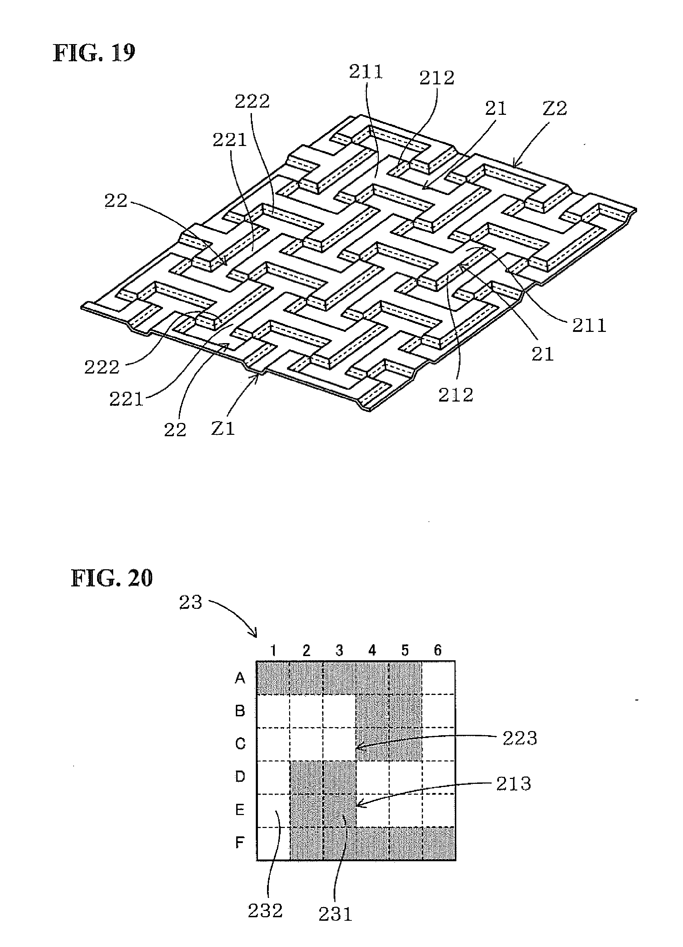

As shown in FIG. 20 through FIG. 21, the sheet material 1 that has the concave-convex part 20 of the present embodiment is an example wherein the interior of the unit area 23 is divided longitudinally and laterally into six equal parts (FIG. 20). Specifically, as shown in FIG. 20, a box that exists in one arbitrary corner of the unit area 23 is designated as a reference box (1-A). The column along the side of the unit area 23 that includes the reference box (1-A) is designated as a first column, and the successive columns adjacent to the first column are designated as second through sixth columns. Likewise, the row along the side of the unit area 23 that includes the reference box (1-A) is designated as an A row, and the successively adjacent rows are designated as B-F rows. Here, each box that intersects a column and a row is indicated using the column number and the row letter.

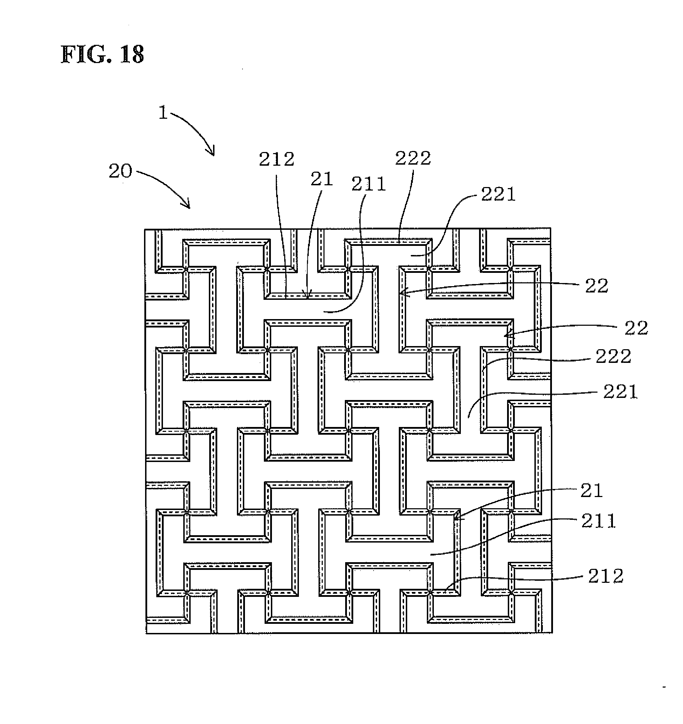

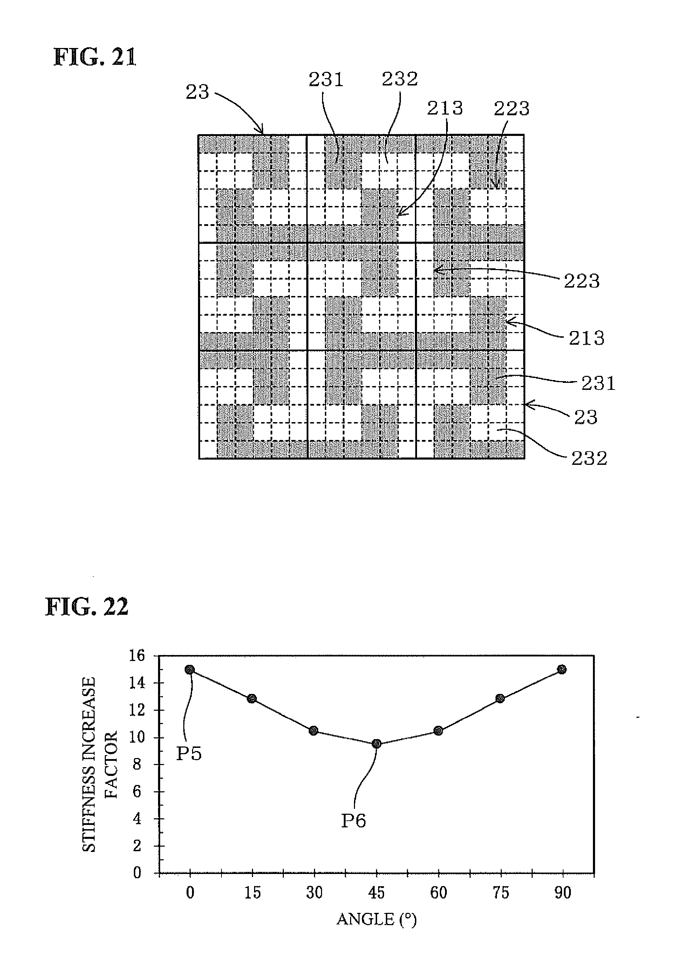

In the reference area 23 of the present embodiment, the eighteen boxes comprising the boxes 1-A- 5-A, boxes 4-B - 5-B, boxes 4-C - 5-C, boxes 2-D - 3-D, boxes 2-E - 3-E, and boxes 2-F - 6-F are the first boxes 231, and the other eighteen boxes are the second boxes 232.
At this time, as shown in FIG. 20, two of the first reference areas 213 and two of the second reference areas 223 are formed in the unit area 23.
In addition, as shown in FIG. 21, the present embodiment is the sheet material 1 (FIG. 18 and FIG. 19) that is continuously disposed in the intermediate reference plane such that the unit areas 23 have line symmetry with respect to their sides. Other aspects of the configuration are the same as those in the first embodiment.

### (FEM Analysis)

In the present embodiment, too, an FEM analysis was conducted as in the first embodiment.

### <Bending Stiffness Evaluation of a Cantilevered Beam>

In the FEM analysis of the cantilevered beam, as shown in FIG. 19, the one end Z1 of the test piece is fixed, the other end Z2 is a free end, and the amount of deflection was calculated when a load of 1 N was applied to the center part of the free end.
The test piece has a rectangular shape measuring 120 mm × 120 mm, and the concave-convex part 20 described in the present embodiment is formed over the entire surface. In addition, based on the percentage of increase of the surface area, the sheet thickness t after the formation of the sheet is 0.273 mm.
The evaluation was performed by comparing the amount of deflection obtained by conducting the same FEM analysis on the flat sheet shaped original sheet whereon the concave-convex part 20 is not formed.

### <0° Direction>

A side of the test piece is provided in the directions parallel to one side of the unit area 23 (FIG. 20).
It was found that the bending stiffness of the sheet material 1 that has the concave-convex part 20 of the fourth embodiment increased by 14.89 times over that of the flat sheet shaped original sheet.

### <45° Direction>

A side of the test piece is provided in the directions that form a 45° angle with respect to one side of the unit area 23 (FIG. 20).
It was found that the bending stiffness of the sheet material 1 that has the concave-convex part 20 of the fourth embodiment increased by 9.45 times over that of the flat sheet shaped original sheet.

In addition, using the same FEM analysis method of a cantilevered beam, a bending stiffness evaluation was performed for the cases wherein the angle between one side of the test piece and one side of the unit area 23 was changed to the directions corresponding to 0°, 15°, 30°, 45°, 60°, 75°, and 90°. The results of the FEM analysis are shown in the graph (FIG. 22), wherein the abscissa represents the angle and the ordinate represents the bending stiffness increase factor. As a result, it can be clearly seen that the stiffness increase factor (P6) in the 45° direction is 9.45 times, which is the minimum value, and the stiffness increase factor (P5) in the 0° direction is 14.89 times, which is the maximum value.

### <Surface Stiffness Evaluation of a Disk>

In an FEM analysis of a disk, as shown in FIG. 6, only the movement in the thickness directions of the sheet was constrained over the entire perimeter of the outer circumferential end part P of the test piece, and the amount of deflection was calculated when a load of 1 N was applied to the center part of the disk.
The test piece has a discoidal shape with a radius of 60 mm, and the concave-convex part 20 described in the present embodiment is formed over the entire surface.
The stiffness evaluation was performed by comparing the amount of deflection obtained by conducting the same FEM analysis on the flat sheet shaped original sheet whereon the concave-convex part 20 is not formed.
As a result of the FEM analysis of the disk, it was found that the stiffness of the sheet material 1 that has the concave-convex part 20 of the fourth embodiment increased by 12.08 times over that of the flat sheet shaped original sheet.

### (Three Point Bending Test)

In the three point bending test, as shown in FIG. 15, the test piece was disposed on two fulcrums W, which comprise two cylindrical support members laid on their sides and disposed parallel to one another with a fulcrum-to-fulcrum distance S = 120 mm, a load was applied by a flat sheet shaped pressing jig J, whose tip cross section forms a semicircular shape, and the amount of displacement was measured at the center position of the test piece surface. The evaluation was conducted by performing the same three point bending test on the flat sheet shaped original sheet whereon the concave-convex part 20 is not formed, and then comparing line graphs of load versus displacement.

The test piece is an A1050-O material with a shape prior to forming that measures 100 mm × 150 mm and a sheet thickness t of 0.3 mm, and the concave-convex part 20 described in the present embodiment is formed over the entire surface. In the test piece, the forming direction of the concave-convex part 20 is the same as in the cases of the FEM analyses of the cantilevered beam in the 0° direction and the 45° direction.
Furthermore, regarding the shape of the concave-convex part 20 of the test piece used in the three point bending test of the present embodiment, the inclination angle θ₁ (°) of the first side surface 212 with respect to the intermediate reference plane K3 and the inclination angle θ₂ (°) of the second side surface 222 with respect to the intermediate reference plane K3 are both 30°; furthermore, the first side surface 212 and the second side surface 222 are each formed as one continuous flat surface without any bent parts. In addition, the projection height H1 (mm) of the first area 21 and the projection height H2 (mm) of the second area 22 are both 1.5 mm.

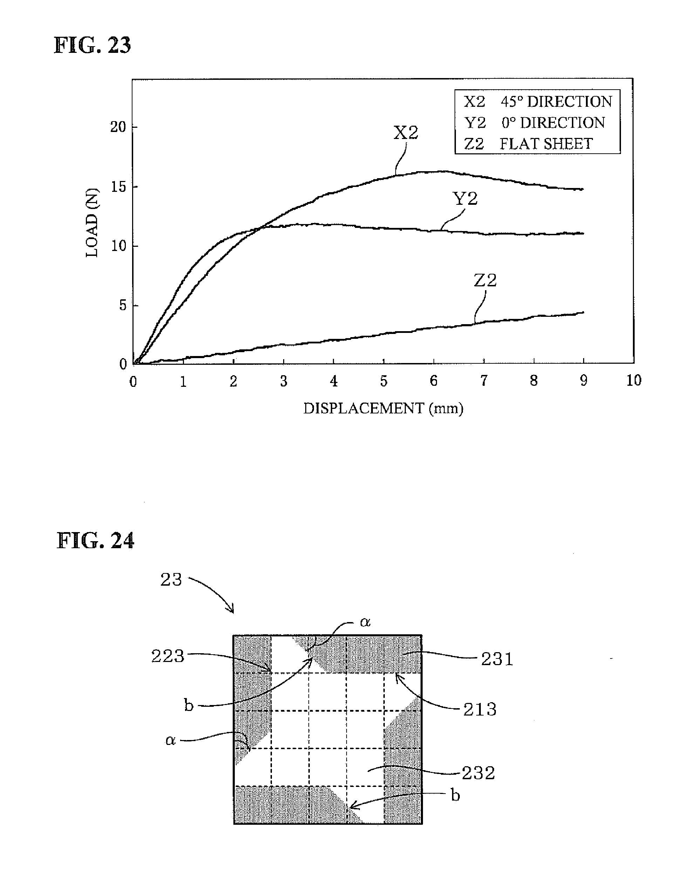

FIG. 23 shows a load versus displacement line graph, wherein the ordinate represents the load obtained from the results of the three point bending test, and the abscissa represents the displacement. In the same figure, a solid line X2 indicates the results of measuring the sheet material 1 provided with the concave-convex part 20 in the 45° direction, a solid line Y2 indicates the results of measuring the sheet material 1 provided with the concave-convex part 20 in the 0° direction, and a solid line Z2 indicates the results of measuring the flat sheet shaped original sheet.

As shown in FIG. 23, the rising slope angle of the solid line X2 is 12.1 times that of the solid line Z2. Accordingly, it can be clearly seen that the bending stiffness of the sheet material 1 provided with the concave-convex part 20 in the 45° direction increased by 12.1 times over that of the flat sheet shaped original sheet. In addition, the rising slope angle of the solid line Y2 was 15.4 times that of the solid line Z2. Accordingly, it can be clearly seen that the bending stiffness of the sheet material 1 provided with the concave-convex part 20 in the 0° direction increased by 15.4 times over that of the flat sheet shaped original sheet.
Based on the results of the FEM analysis and the three point bending test, it can be said that the concave-convex part 20 of the present embodiment has an extremely superior shape with a particularly large stiffness increase factor and little stiffness anisotropy.

### (Fifth Embodiment)

As shown in FIG. 24, the sheet material 1 that has the concave-convex part 20 of the present embodiment is an example wherein the interior of the unit area 23 is longitudinally and laterally divided into five equal parts.
Four oblong shapes are formed, each consisting of three of the first boxes 231 lined up in a row. The four oblong shapes, each of which consists of the first boxes, are each disposed such that they do not contact one another and such that their long side contacts one of the sides of the unit area 23.

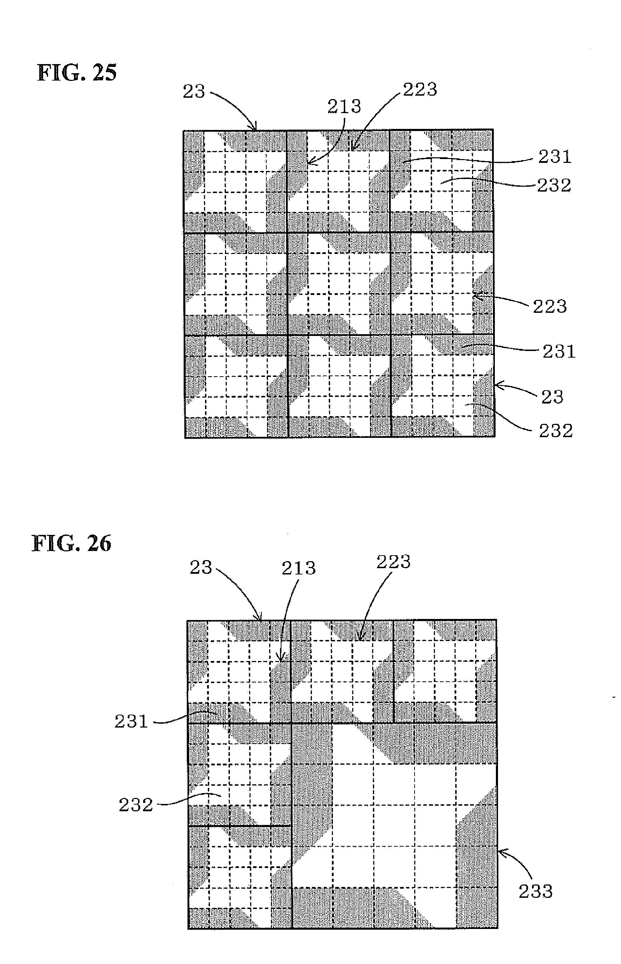

Furthermore, as shown in FIG. 24, in the boundary lines between the first boxes 231 and the second boxes 232, namely, a short side b, which is positioned on the side opposite the short side positioned in the corner of the oblong unit area 23 consisting of the first boxes, is inclined at an angle α = 45° that is formed between the short side b and a side of the unit area 23. At this time, the surface area of the first reference areas 213 to be formed and the surface area of the second reference area 223 to be formed are the same before and after the short side b is inclined.
As shown in FIG. 25, the unit areas 23 are arranged continuously with the same attitude longitudinally and laterally. The concave-convex part 20, wherein the first reference areas 213 and the second reference areas 223 shown in FIG. 25 protrude toward the first reference plane K1 and the second reference plane K2, is formed.
Other aspects of the configuration are the same as those in the first embodiment.

In the present embodiment, the formability of the sheet material 1 that has the concave-convex part 20 can be improved, its range of applications can be expanded, its designability can be improved, and the like.
Otherwise, the same functions and effects as those obtained by the first embodiment are obtained.
Furthermore, in the present embodiment, the inclination angle α of the contour line is 45°, but the present embodiment is not limited thereto.

### (Sixth Embodiment)

The present embodiment, as shown in FIG. 26, is a modified example of the sheet material 1 that has the concave-convex part 20 of the fifth embodiment.
The sheet material 1 shown in FIG. 26 is an example wherein the unit areas 23 of the fifth embodiment and a unit area 233, which is twice the size of the unit area 23, are disposed in combination. In the present embodiment, the concave-convex part 20, which protrudes from the first reference areas 213 and the second reference areas 223 shown in FIG. 26 toward the first reference plane K1 and the second reference plane K2, is formed.
Other aspects of the configuration are the same as those in the first embodiment.

The present embodiment can be adapted to concave-convex part shapes of various sizes in accordance with the application. In addition, the designability can be improved. Furthermore, a sheet material whose stiffness varies by location can be obtained by changing the sizes of the unit areas.
Otherwise, the same functions and effects as in the first embodiment are obtained.

### (Seventh Embodiment)

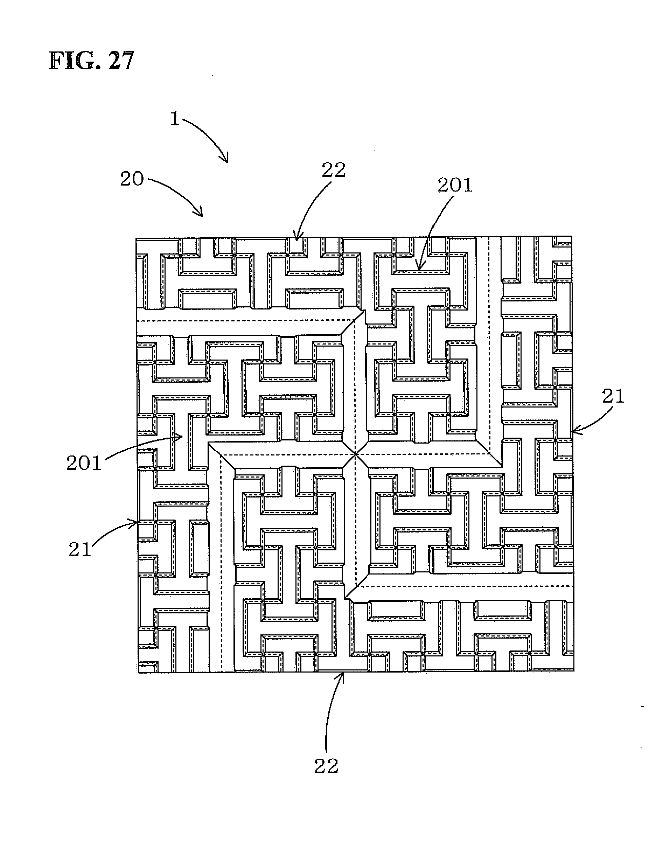

The present embodiment as shown in FIG. 27 is an example of the sheet material 1 that has the concave-convex part 20 described in the fourth embodiment, but wherein sub concave-convex parts 201 are formed in the first top surfaces 211 and the second top surfaces 221. The first reference plane K1 and the second reference plane K2 serve as the neutral planes, and the sub concave-convex parts 201, each of which has a shape that corresponds to the shape of the concave-convex part 20 reduced to substantially 1/8 of its size, are caused to protrude vertically in the sheet thickness directions. Other aspects of the configuration are the same as those in the first embodiment.
In the present embodiment, the stiffness increase factor of the sheet material 1 that has the concave-convex part 20 is further increased. Otherwise, the functions and effects obtained are the same as those obtained in the first embodiment.

### (Eighth Embodiment)

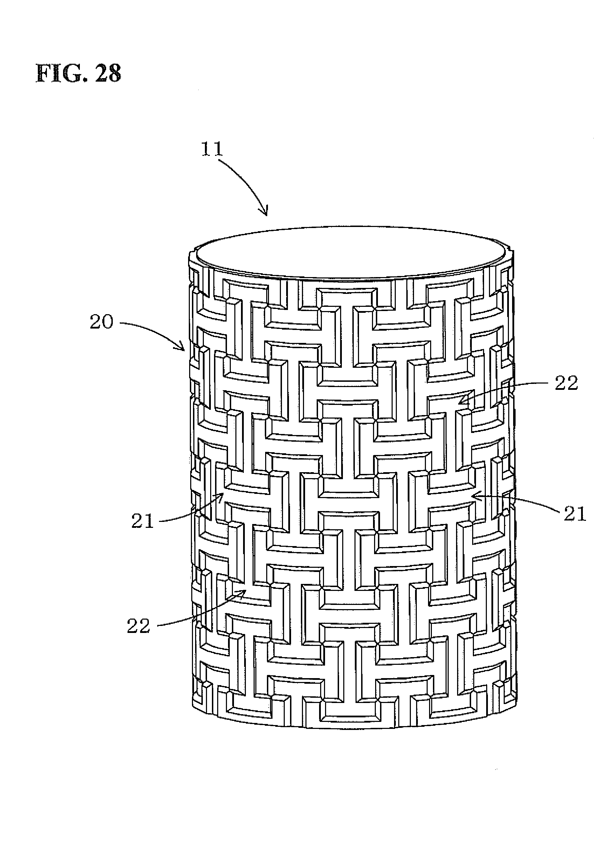

The present embodiment, as shown in FIG. 28, is an example wherein the concave-convex part 20 is provided to a cylindrical member 11. In the present embodiment, the first reference plane K1, the intermediate reference plane K3, and the second reference plane K2 are cylindrical curved planes that are successively disposed parallel to one another. With regard to the unit shape of the concave-convex part 20, the unit shape 23 described in the fourth embodiment is conformed to a curved surface that constitutes the intermediate reference plane K3, and the unit shapes 23 are projected to the intermediate reference plane K3. Other aspects of the configuration are the same as those in the first embodiment.
As described in the present embodiment, the sheet material 1 that has the superior concave-convex part 20, whose stiffness is high, can be deformed into a variety of shapes, thereby expanding its range of application. Otherwise, the functions and effects obtained are the same as those obtained in the first embodiment.

In addition, by using a cylindrical structure like a beverage can or a rocket, it is possible to increase the stiffness of the cylindrical member 11 that has the concave-convex part 20 described in the present embodiment without increasing the sheet thickness of the material. In addition, the cylindrical member 11 of the present embodiment has superior energy absorption characteristics. Consequently, using such a member in an automobile and the like imparts high stiffness and superior energy absorption characteristics.

### (Ninth Embodiment)

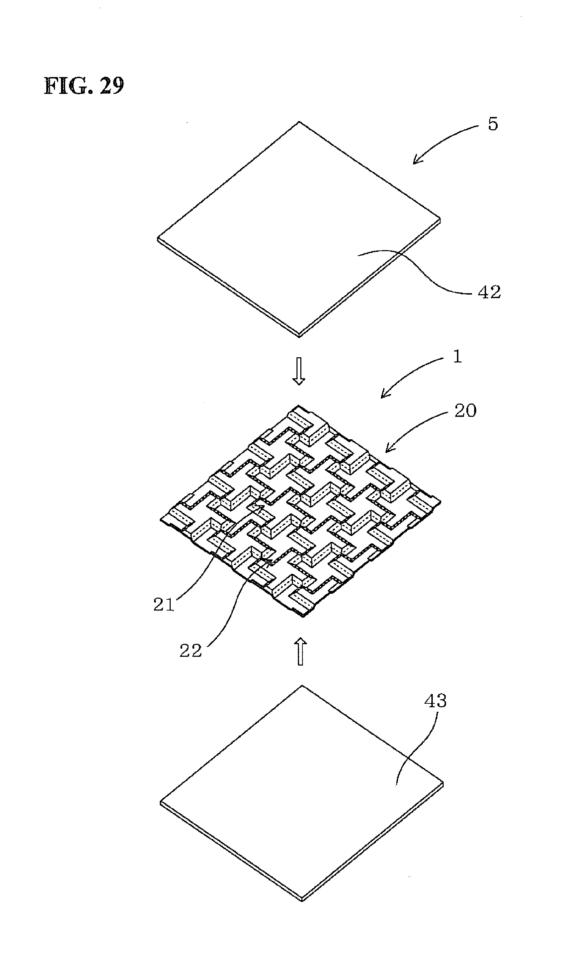

The present embodiment, as shown in FIG. 29, is an example wherein a laminated structure 5 is configured using as the core material the sheet material 1 that has the concave-convex part 20 of the first embodiment.
Namely, the laminated structure 5 joins faceplates 42, 43 to the surfaces on both sides of the core material, which consists of one sheet material 1 that has the concave-convex part 20.
The faceplates 42, 43 are aluminum alloy sheets that are made of 3000 series material and whose sheet thickness is 1.0 mm.

In the laminated structure 5 of the present embodiment, the sheet material 1 that has the concave-convex part 20, which has superior stiffness as discussed above, is used as the core material, and the faceplates 42, 43 are joined, by bonding, brazing, and the like, to the first top surfaces 211 of the first areas 21 and the second top surfaces 221 of the second areas 22; thereby, the laminated structure 5 obtains a remarkably higher stiffness than that of the sheet material that has the concave-convex part 20 as a standalone. Moreover, because the sheet material 1 and the faceplates 42, 43 are aluminum alloy sheets, the weight is also reduced.
In addition, a damping characteristics improvement effect is obtained attendant with the stiffness increase, and a sound absorption improvement effect is also obtained by the incorporation of air layers. In addition, as is well known, the sound absorbing characteristics can be further improved via the formation of a through hole in either of the faceplates 42, 43 so as to form a Helmholtz sound absorbing structure.
Furthermore, it is also possible to use, as the faceplates, a sheet made of resin or a metal other than an aluminum alloy, for example, a steel sheet or a titanium sheet.

### (Tenth Embodiment)

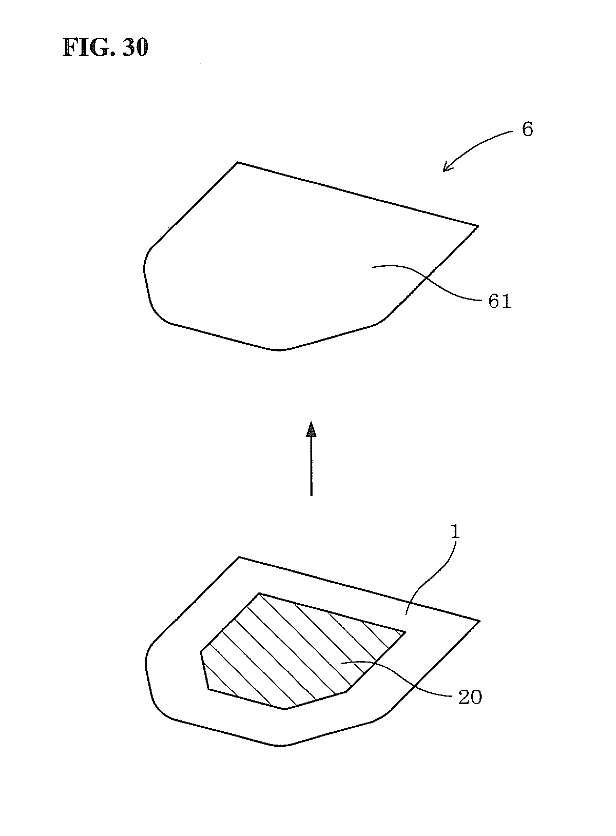

The present embodiment, as shown in FIG. 30, is an example of a vehicle panel 6 that is configured by using as the inner panel the sheet material 1 according to the first embodiment through the seventh embodiment, and disposing the first top surfaces 211 of the first areas 21 toward the rear surface side of an outer panel 61. Furthermore, the outer panel 61 is joined, by hemming and the like, to an outer circumferential part of the inner panel.

In the vehicle panel 6 of the present embodiment, the sheet material 1 that has the concave-convex part 20 and that constitutes the inner panel obtains an excellent stiffness increase effect, as mentioned above, and therefore has the excellent characteristic of absorbing the energy of a primary impact as well as the energy of a secondary impact in the event the vehicle collides with a pedestrian. In addition, the damping characteristics improvement effect attendant with the stiffness increase is obtained, and the sound absorption improvement effect owing to the incorporation of an air layer is also obtained.
Furthermore, in the present embodiment, the sheet material 1 that has the concave-convex part 20 is used as the inner panel, but the sheet material 1 can also be used as the as the inner panel or the outer panel, or both.

## Claims

1. A sheet material whose stiffness is increased by the formation of a concave-convex part, wherein
three reference planes-namely, a first reference plane, an intermediate reference plane, and a second reference plane, which are three virtual planes that are successively disposed spaced apart and parallel to one another-are used as a reference;
it is assumed that unit areas, which are virtual squares, are spread out in the intermediate reference plane;
virtual boxes, which are partitioned by a lattice that longitudinally and laterally divides the interior of each of the unit areas into n equal parts, wherein n is an integer greater than or equal to 4, are categorized into two types, namely, first boxes and second boxes;
each column and each row of the boxes are arranged such that they definitely contain both the first boxes and the second boxes and such that two or more of the same type of box are disposed adjacently either longitudinally or laterally, and such that the total number of the first boxes and the total number of the second boxes inside each unit area are both an integer that is within the range of n²/2 ±0.5;
the areas in which the first boxes are linked serve as first reference areas;
the areas in which the second boxes are linked serve as second reference areas;
the concave-convex part is provided with first areas, which protrude from the first reference areas defined in the intermediate reference plane toward the first reference plane, and second areas, which protrude from the second reference areas defined in the intermediate reference plane toward the second reference plane;
each of the first areas comprises a first top surface, which is a projection of the first reference area into the first reference plane at either unity or reduction magnification, and first side surfaces, which connect the contour of the first top surface with the contour of its first reference area; and
each of the second areas comprises a second top surface, which is a projection of the second reference area into the second reference plane at either unity or reduction magnification, and second side surfaces, which connect the contour of the second top surface with the contour of its second reference area.

2. A sheet material that has the concave-convex part according to claim 1, wherein 4 ≤ n ≤ 10.

3. A sheet material that has the concave-convex part according to claim 1 or claim 2, wherein the first reference areas and the second reference areas are configured by linking the first boxes and the second boxes, respectively, and then by deforming some of the corner parts of both into arcuate shapes such that the surface areas of both do not change.

4. A sheet material that has the concave-convex part according to any one of claim 1 through claim 3, wherein
the first reference areas and the second reference areas are configured by linking the first boxes and the second boxes, respectively, and then by inclining some of the boundary lines of both such that the surface areas of both do not change.

5. A sheet material that has the concave-convex part according to any one of claim 1 through claim 4, wherein
the unit areas are all of the same size.

6. A sheet material that has the concave-convex part according to any one of claim 1 through claim 5, wherein
the unit areas are of a plurality of sizes.

7. A sheet material that has the concave-convex part according to any one of claim 1 through claim 6, wherein
an inclination angle θ₁ (°) of the first side surface with respect to the intermediate reference plane and an inclination angle θ₂ (°) of the second side surface with respect to the intermediate reference plane are within the range of 10°-90°.

8. A sheet material that has the concave-convex part according to any one of claim 1 through claim 7, wherein
at least part of the first top surface and at least part of the second top surface are provided with sub concave-convex parts, whose shapes protrude vertically in the thickness directions using the first reference plane and the second reference plane, as neutral planes.

9. A sheet material that has the concave-convex part according to any one of claim 1 through claim 8, wherein
at least part of the first reference plane, at least part of the intermediate reference plane, and at least part of the second reference plane, these planes being successively arranged, are parallel curved surfaces.

10. A sheet material that has the concave-convex part according to any one of claim 1 through claim 9, wherein
in the sheet material, the concave-convex part is formed by press forming a metal sheet.

11. A sheet material that has the concave-convex part according to claim 10, wherein
a sheet thickness t (mm) of the metal sheet prior to forming is 0.05-6.0 mm.

12. A sheet material that has the concave-convex part according to claim 10 or claim 11, wherein
a ratio L/t of a length L (mm) of one side of the square to the sheet thickness t (mm) is 10-2000.

13. A sheet material that has the concave-convex part according to any one of claim 10 through claim 12, wherein
a ratio H1/t of a projection height H1 (mm) of the first area to the sheet thickness t (mm), and the maximum inclination angle θ₁ (°) formed between the first side surface and the intermediate reference plane have the relationship 1 ≤ (H1/t) ≤ -3θ₁ + 272; and
a ratio H2/t of a projection height H2 (mm) of the second area to the sheet thickness t (mm), and the maximum inclination angle θ₂ (°) formed between the second side surface and the intermediate reference plane have the relationship 1 ≤ (H2/t) ≤ -3θ₂ + 272.

14. A laminated structure wherein a plurality of sheet materials are laminated, wherein
at least one of the sheet materials is a sheet material that has the concave-convex part according to any one of claim 1 through claim 13.

15. A vehicle panel that has an outer panel and an inner panel, which is joined to a rear surface of the outer panel, wherein
one or both of the outer panel and the inner panel comprises a sheet material that has a concave-convex part according to any one of claim 1 through claim 13.
